## Europäisches Patentamt
## European Patent Office
## Office européen des brevets

(11) Veröffentlichungsnummer: **0 060 501**
**B1**

(12) **EUROPÄISCHE PATENTSCHRIFT**

(45) Veröffentlichungstag der Patentschrift.
23.07.86

(51) Int. Cl.⁴: **B 27 C 5/06**

(21) Anmeldenummer: **82101895.9**

(22) Anmeldetag: **10.03.82**

(54) **Bogenbearbeitungsmaschine.**

(30) Priorität: **12.03.81 DE 3109427**
**19.06.81 DE 3124142**
**02.03.82 DE 3207510**

(43) Veröffentlichungstag der Anmeldung:
**22.09.82 Patentblatt 82/38**

(45) Bekanntmachung des Hinweises auf die Patenterteilung:
**23.07.86 Patentblatt 86/30**

(84) Benannte Vertragsstaaten:
**AT BE CH FR GB IT LI NL SE**

(56) Entgegenhaltungen:
**DE-A-2 703 222**
**DE-C-888 925**
**DE-U-7 918 742**
**FR-A-468 029**
**FR-A-2 280 485**
**GB-A-455 161**
**US-A-2 613 706**
**US-A-3 421 559**
**US-A-3 584 665**
**US-A-3 717 186**
**US-A-3 844 399**

(73) Patentinhaber: **Stegherr, Ludolf, Urbanstrasse 3,
D-8400 Regensburg (DE)**

(72) Erfinder: **Stegherr, Ludolf, Urbanstrasse 3, D-8400
Regensburg (DE)**

(74) Vertreter: **Wasmeier, Alfons, Dipl.- Ing., Postfach
382 Greflingerstrasse 7, D-8400 Regensburg (DE)**

## Beschreibung

Die Erfindung bezieht sich auf das Profilfräsen, Fälzen, Profilschleifen, Polieren, Abrichten oder dergl. Bearbeiten von einfach oder mehrfach geschwungenen, bogenförmigen oder in sonstiger Weise beliebig gekrümmten Werkstücken in Stabform, vorzugsweise aus Holz, und insbes. auf den Vorschub derartiger Werkstücke, die beispielsweise für Türbögen, Rundbogenfenster, geschwungene Möbelteile und dergl. verwendet werden.

Zum Fräsen von Profilen von der Seite her sind z.B. Tischfräsen bekannt, bei denen das Werkzeug mit einem kugelgelagerten Anlaufring kombiniert ist, der einen Anlauffixpunkt ergibt. Dabei wird das Werkstück von Hand geführt und an dem Werkzeug auf einem Werktisch aufliegend vorbeibewegt, wobei die Stirnseite des Werkstückes in Eingriff mit der stirnseitigen vertikalen Arbeitsfläche des Werkzeuges kommt.

Eine Vorrichtung zum Profilfräsen kreisbogenförmig gekrümmter Stäbe ist beispielsweise aus dem DE-GM 79 18 742 bekannt. Der zu fräsende gekrümmte Stab wird dabei zwischen einer einen kreisbogenförmigen Vorschub bedingenden Anschlaganordnung und einer parallel zur Bewegungsebene des Stabes sich erstreckenden, motorisch angetriebenen Mitnehmerscheibe geführt und eingespannt, und es ist ein Profilfräser zum linearen Fräsen auf einer parallel zur Bewegungsebene und etwa radial zur Mitnehmerebene verlaufenden ortsfesten Achse angeordnet. Bei dieser bekannten Anordnung erfolgt die Bearbeitung des Werkstückes von oben, und das Werkstück wird über eine gezähnte Mitnehmerscheibe transportiert. Insbesondere bei Werkstücken aus Holz wird dabei die Eingriffsfläche beim Transport beschädigt. Der entscheidende Nachteil einer derartigen Vorrichtung besteht jedoch darin, daß ein Bearbeiten des Werkstückes von der Seite nicht möglich ist, und daß der Form des Werkstückes angepaßte Mittel, z.B. feste Anschläge notwendig sind, die auf ein bestimmtes Werkstück fest eingestellt werden, so daß beim Übergang von einer Werkstückform auf eine andere eine Verstellung der Vorrichtung relativ zum Werkstück erforderlich wird.

Des weiteren ist es bekannt, zum Sägen von gekrümmtem Baumstämmen den mittigen Auftrennabschnitt entlang einer gekrümmten Bahn zu führen, die der gekrümmten Form des Baumstammes so gut wie möglich folgt. Dies kann von Hand oder mit Hilfe einer Vorrichtung nach der DE-OS 27 03 222 erfolgen, die Einrichtungen zur Führung des Stammholzes auf der bogenförmig gekrümmten Bahn durch die Bandsäge aufweist, welche mit zwei oder mehr Führungseinrichtungen versehen sind, die abhängig von der Krümmung des Stammes quer zur Vorschubrichtung verschiebbar ausgebildet sind, wobei wenigstens eine dieser Führungseinrichtungen zwei zwangsläufig miteinander gekoppelte, senkrecht gelagerte Führungsrollen auf jeder Seite des Stammes und eine die Walze an den Seiten des Stammes anpressende Vorrichtung aufweist.

Aufgabe der Erfindung ist es, eine Bogenbearbeitungsmaschine der gattungsgemäßen Art so auszugestalten, daß gebogene oder geschwungene Werkstücke von der Seite bzw. von oben her gefräst, geschliffen oder in entsprechender Weise bearbeitet werden können, indem die Werkstücke mit unterschiedlichen bzw. beliebigen Krümmungen ohne Handverstellung von Vorschubelementen aufgenommen und transportiert werden können und die Vorschubeinrichtung sich selbsttätig der Form des jeweiligen Werkstückes anpaßt; ferner ist Aufgabe der Erfindung, die Vorschubeinrichtung derartiger Bogenbearbeitungsmaschinen so auszugestalten, daß unabhängig von Krümmungsradien des Werkstückes die Verbindungen der Anschlagglieder mit den Mitnahmegliedern zu beiden Seiten des Werkzeuges stets eine etwa parallele Lage einnehmen.

Gemäß der Erfindung wird dies dadurch erreicht, daß die Mitnehmervorrichtung aus einer motorgetriebenen, ortsfesten Transport- und Führungsvorrichtung sowie sich auf das Werkstück einstellenden, in Richtung der Werkstückvorschubrichtung angeordneten, beweglichen bzw. schwenkbaren weiteren Transport- und Führungsvorrichtungen besteht, die Transport und Führungsvorrichtungen auf einem als Auflage für das Werkstück dienenden Tisch befestigt sind, das Bogenbearbeitungswerkzeug in der Mitte zwischen den Transport- und Führungsvorrichtungen und gegenüber einem festen Anschlag oder Werkstückniederhalten angeordnet ist, und die Anschlagvorrichtung einstellbare Anschlagglieder aufweist, die zumindest mit einem Teil der Transport- und Fürungsvorrichtungen so verbunden sind, daß der Abstand zwischen letzteren und den zugeordneten Anschlaggliedern mindestens angenähert konstant bleibt.

Bei einer Ausführungsform der Erfindung, bei der das Werkzeug von oben auf das jeweilige Werkstück einwirkt, wird vorgeschlagen, daß die Mitnehmervorrichtung mindestens ein Paar von miteinander gelenkig gekoppelten, angetriebenen Transport- und Führungsvorrichtungen aufweist, die in Anlage mit dem Werkstück stehen, daß eine achsfeste Anschlagvorrichtung auf der anderen. Werkstückfläche in Anlage steht, daß die Anschlagvorrichtung mit der Kopplung eine feste Verbindung aufweist, und daß das Bearbeitungswerkzeug an der Verbindung und/oder der Kopplung befestigt ist.

Bei einer weiteren Ausführungsform der Erfindung ist die Vorschubeinrichtung so ausgebildet, daß die Transport- und Führungsvorrichtung achsfest ausgebildet ist, daß ein Anschlagglied ein fester Anschlag, z.B. eine Anschlagrolle ist, daß die Transport- und Führungsvorrichtungen Antriebsrollen sind, daß mindestens ein Teil der Anschlagrollen und/oder der Führungsrollen gegen das Werkstück vorgespannt sind, wobei die Führungsrollen vorzugsweise paarweise zu beiden Seiten der achsfesten Transport- und Führungsvorrichtung angeordnet sind, und wobei die Führungsvorrichtungen miteinander schwenkbar bzw. gelenkig verbunden sind.

In weiterer Ausgestaltung der Erfindung wird bei einer Vorschubeinrichtung der gattungsgemäßen Art, bei der das Werkzeug von der Seite her auf das Werkstück einwirkt, vorgeschlagen, daß eine Anschlagvorrichtumg auf einer Werkstückseite vorgesehen ist, daß die Mitnehmervorrichtung eine achsfeste Transport- und Führungsvorrichtung und sich auf das Werkstück einstellende, in Richtung der Werkstückvorschubrichtung angeordnete weitere Transport- und Führungsvorrichtungen aufweist, und daß die Anschlagvorrichtung aus einstellbaren Anschlaggliedern besteht, die mit den Transport- und Führungsvorrichtungen so verbunden sind, daß bei einer Auslenkung einzelner Transport- und Führungsvorrichtungen der Abstand zwischen letzteren und den zugeordneten Anschlaggliedern im wesentlichen konstant bleibt, wobei die Mitnehmervorrichtung vorzugsweise Paare von miteinander gelenkig gekoppelten, angetriebenen Transport- und Führungsgliedern im Anlage mit dem Werkstück aufweist und eine achsfeste Anschlagvorrichtung auf der entgegengesetzten Werkstückseite in Anlage steht, wobei das Anschlagglied beispielsweise ein fester Anschlag oder eine Anschlagrolle bzw. ein System aus mehreren Rollen ist, die relativ zum Werkstück einstellbar ausgebildet sind, und wobei sowohl die Anschlagglieder als die Transportund Führungsvorrichtungen als Rollen ausgebildet sind, die gegen das Werkstück vorgespannt sind.

Eine andere Ausführungsform der Erfindung, bei der das Werkzeug ebenfalls von der Seite her auf das Werkstück einwirkt, ist so ausgebildet, daß auf der dem Werkzeug abgewandten Seite des Werkstückes ein Aggregat aus Antriebsmotor, Abtrieb für die dem Werkzeug zugeordnete Transportvorrichtung, Abtrieb für die vorlaufende und nachlaufende Transportvorrichtung und mit beiden letzteren verbundener Andrückvorrichtung auf der gegenüberliegenden Werkstückseite vorgesehen ist, und daß die beiden äußeren Antriebsvorrichtungen an den Abtrieben schwenkbar so gelagert sind, daß die Verbindungsachsen von Transportvorrichtung und zugehöriger Antriebsvorrichtung bei einer Verschwenkung infolge Werkstückkrümmung stets zumindest annähernd parallel zueinander und ihre Ausgangsläge beibehaltend angeordnet sind, wobei die schwenkbare Lagerung vorzugsweise als Parallelogrammlagerung ausgebildet ist.

Weitere Merkmale der Erfindung sind Gegenstand der Unteransprüche.

Mit dem erfindungsgemäßen Vorschlag wird erreicht, daß ein beliebig gebogenes oder geschwungenes Werkstück durch den zwischen den Transport- und Fährungsvorrichtungen und den Anschlaggliedern gebildeten Spalt transportiert wird, indem das System aus gelenkig miteinander verbundenen Führungsvorrichtungen sich der jeweiligen Krümmung des Werkstückes anpaßt und die Verbindung der Anschlagglieder mit den Führungsvorrichtungen sich selbsttätig senkrecht zur Vorschubrichtung einstellt, so daß die angetriebenen Führungsrollen zusammen mit den entweder ebenfalls synchron angetriebenen oder aber nicht angetriebenen Anschlaggliedern, z.B. Gegendruckrollen den Transport des Werkstückes ergeben. Dabei sind die Gegendruckrollen vorzugsweise jeweils einem Paar von Führungsrollen zugeordnet und mit diesen über eine mechanische Verbindung, z.B. ein T-förmiges Verbindungsstück, fest verbunden, wobei zur Anpassung an verschiedene Werkstückdicken die Gegendruckrollen auf dem senkrechten Balken des T verschiebbar befestigt sind. Auf diese Weise bleibt der minimale Abstand zwischen den Führungsrollen und den Gegendruckrollen stets gleich, unabhängig von der Form bzw. der Krümmung des Werkstückes. Dadurch, daß das Werkzeug, z.B. der Fräser, von oben her in das Werkstück eingrift, lassen sich beliebige Kehlungen, Vertiefungen und dergl. des Profiles erzielen. Wird das Werkzeug, dessen Achse horizontal verläuft, so angeordnet, daß das Werkzeug um seine horizontale Achse verschwenkbar ist, lassen sich sogar Hinterschmeidungen im Profil erzielen.

Die erfindungsgemäße Einrichtung ist z.B. ein Aufsatzgerät für handelsübliche Tischfräsen, das auf dem Arbeitstisch der Tischfräse fest gespannt wird und jederzeit abnehmbar ist. Mit einem derartigen Aufsatzgerät kann der erforderliche Arbeitsvorgang des Profilfräsens, Fälzens, Profilschleifens oder dergl. auch mit Hilfe einer Schablone vorgenommen werden.

Es liegt im Rahmen vorliegender Erfindung, die Vorschubeinrichtung anstatt auf dem Arbeitstisch unterhalb des Arbeitstisches anzuordnen und einen gemeinsamen Antrieb für das Fräswerkzeug und die Vorspanneinrichtung zu verwenden. Eine derartige Ausführungsform der Erfindung macht jedoch erforderlich, daß die angetriebenen Achsen der Transport- und Führungsvorrichtungen durch entsprechende Aussparungen des Arbeitstisches hindurchgeführt werden, wobei beispielsweise die Spindel der Tischfräse als Hohlspindel ausgeführt wird, in deren Innerem die Antriebswelle für die Vorschubeinrichtung untergebracht ist.

Weiterhin wird mit vorliegender Erfindung erreicht, daß bei beliebig gekrümmten Werkstücken, auch bei kleinen Krümmungsradien, die Antriebs- und Transportrollen stets einwandfrei in Anlage mit dem Werkstück stehen und unabhängig von dem Krümmungsgrad des Werkstückes die Verbindungsachsen zwischen Transportrolle und Andrückrolle vor und hinter dem Werkzeug etwa parallel zueinander und etwa in der Position gehalten werden, die sie bei geradem Werkstück einnehmen. Hierzu wird z.B. eine Parallelogrammführung der vorlaufenden und nachlaufenden Transport- und Andrückvorrichtungen vorgesehen. Die Andrückvorrichtungen liegen dabei unter mechanischer Vorspannung am Werkstück an, während die mit dem Werkstück auf der gegenüberliegenden Seite des Werkzeuges zusammenwirkende Transportvorrichtung gegen das Werkstück bzw. das Werkzeug vorgespannt ist. Nachstehend wird die Erfindung in Verbindung mit der Zeichnung anhand von Ausführungsbeispielen erläutert. Es zeigen:

Fig. 1 eine Seitenansicht einer Ausführungsform der erfindungsgemäßen Vorschubeinrichtung in schematischer Darstellung,

Fig. 2 eine Aufsicht auf die Einrichtung nach Fig. 1 in Verbindung mit einem eingelegten Werkstück,

Fig. 3 in Prinzipdarstellung eine Variante der erfindungsgemäßen Vorschubeinrichtung entsprechend der Darstellung nach Fig. 2,

Fig. 4 eine andere Variante der erfindungsgemäßen Vorschubeinrichtung entsprechend der Darstellung nach Fig. 1,

Fig. 5 eine andere Ausführungsform der erfindungsgemäßen Vorschubeinrichtung in seitlicher Ansicht,

Fig. 6 eine Aufsicht auf eine abgeänderte Ausführungsform der erfindungsgemäßen Einrichtung in schematischer Darstellung und in Aufsicht,

Fig. 7 eine Seitenansicht einer weiteren Ausführungsform der erfindungsgemäßen Vorschubeinrichtung in schematischer Darstellung,

Fig. 8 eine Aufsicht auf die Einrichtung nach Fig. 7 in Verbindung mit einem eingelegten Werkstück,

Fig.9 in Aufsicht eine schematische Darstellung einer weiteren Ausführungsform der Vorschubeinrichtung nach der Erfindung, und

Fig. 10 eine Seitenansicht der Vorschubeinrichtung nach Fig. 9 längs der Schnittlinie A-B.

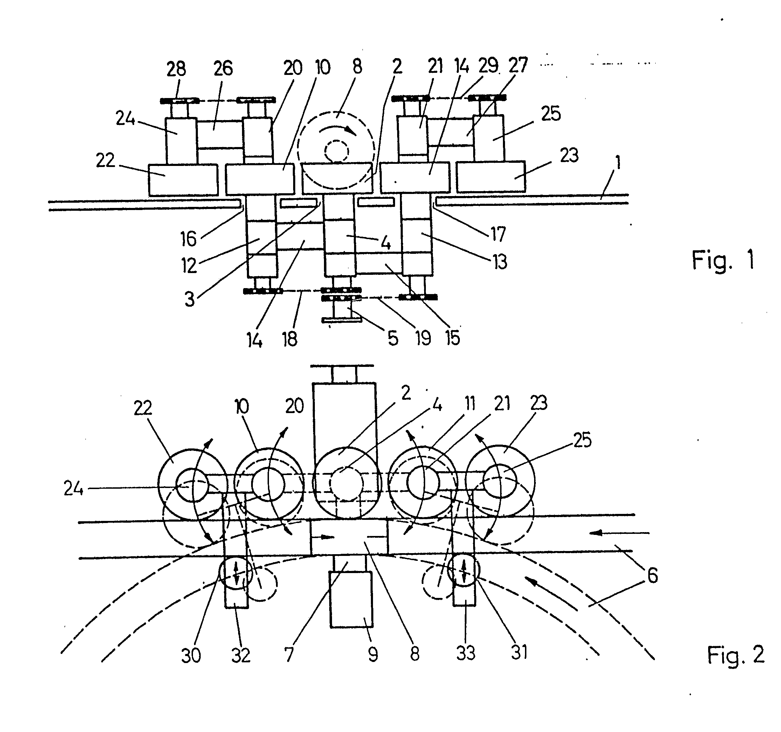

Auf einem Arbeitstisch 1 ist eine achsfeste Führungs- und Transportrolle 2 angeordnet, die von einer durch eine kreisförmige Aussparung 3 des Arbeitstisches 1 reichende Achse 4 über einen Antriebsmotor 5 bzw. eine beliebige Antriebsvorrichtung angetrieben wird. Ein gerades (in Fig. 2 voll ausgezogen dargestelltes) bzw. bogenförmiges (in Fig. 2 gestrichelt angedeutetes) Werkstück 6 liegt an der Rolle 2 an und wird von einem festen Gegenanschlag 7, der jedoch auch eine achsfeste Gegenrolle sein kann, elastisch nachgiebig, z.B. über eine Federanordnung, gegen die Rolle 2 gedrückt. Der Fräser 8 steht von oben in Arbeitseingriff mit dem zu bearbeitenden, z.B. zu fräsenden oder zu schleifenden Werkstück 6. Das Gegenlager ist, wie mit Doppelpfeil dargestellt, auf die Rolle 2 zu und von ihr weg auf verschiedene Werkstückdicken einstellbar. Diese Einstellung erfolgt über eine an sich bekannte Vorrichtung 9, die gleichzeitig auf das Gegenlager 7 eine Vorspannung ausübt.

Der Führungsrolle und Transportrolle 2 sind weiters Führungs- und Transportrollen 10, 11 zugeordnet, die diametral zu beiden Seiten der Rolle 2 angeordnet sind. Die Rollen 10, 11 weisen Achsen 12, 13 auf, die mit der Achse 4 über Gelenkverbindungen 14, 15 gekoppelt sind und die durch Aussparungen 16, 17 im Arbeitstisch 1 geführt sind. Diese Achsen sind über Antriebsverbindungen 18, 19 mit dem Antrieb 5 verbunden, so daß die Achsen 12, 13 mit der gleichen Geschwindigkeit angetrieben sind und umlaufen wie die Achse 4. Die Achsen 12, 13 sind über die Rollen 10, 11 hinaus in entgegengesetzter Richtung in Form der Achsen 20, 21 verlängert. Mit den Rollen 10, 11 sind weitere Führungs- und Transportrollen 22, 23 gelenkig verbunden, die in einer Ebene mit den Rollen 2, 10, 11 liegen und entgegengesetzt zur Rolle 2 angeordnet sind. Die Achsen 24, 25 der Rollen 22, 23 sind über Gelenkverbindungen 26, 27 mit den Achsen 20, 21 der Rollen 10, 11 gekoppelt, derart, daß der Mittelpunkt der Rolle 22 bzw. 23 in einem Kreisbogen um den Mittelpunkt der Rolle 10 bzw. 11 verschwenkbar ist, während der Mittelpunkt der Rolle 10 bzw. 11 eine Kreisbewegung um den Mittelpunkt der Rolle 2 ausführen kann. Des weiteren sind die Rollen 22, 23 über die Antriebsverbindungen 28, 29 mit den Rollen 10, 11 gekoppelt und laufen mit gleicher Geschwindigkeit und in gleicher Drehrichtung mit diesen um.

Bei dieser Ausführung der Antriebsverbindung 26, 27 und der Anordnung der Achsen 24 und 25 sind lediglich die Aussparungen 3 sowie 16 und 17 im Arbeitstisch erforderlich.

Die Transport- und Führungsrollen 2, 10, 11, 22, 23 liegen alle auf der gleichen Seite des Werkstückes 6 an diesem an. Auf der entgegengesetzten Werkstückseite wirkt das Gegenlager 7 mit der Rolle 2 zusammen. Der Abstand des Gegenlagers 7 zur Rolle 2 ist entsprechend der Dicke des Werkstückes 6 einstellbar. Auf der in bezug auf das Werkstück 6 entgegengesetzten Seite der Führungs- und Transportrollen 10, 11, 22, 23 sind Gegendruckrollen 30, 31 vorgesehen, die auf einer Trägerschiene 32, 33 einstellbar festgelegt sind. Die Trägerschienen 32, 33 sind jeweils mit der Gelenkverbindung 26, 27 starr befestigt, so daß die Gegendruckrollen 30, 31 entsprechend und analog der Auslenkung der Rollen 10, 11 und/oder der Rollen 22, 23 verschwenkbar sind. Die Rollen 30 und 31 sind dabei ebenso wie das Rollenlager 7 vorzugsweise gegen das Werkstück 6 vorgespannt, z.B. über Federanordnungen.

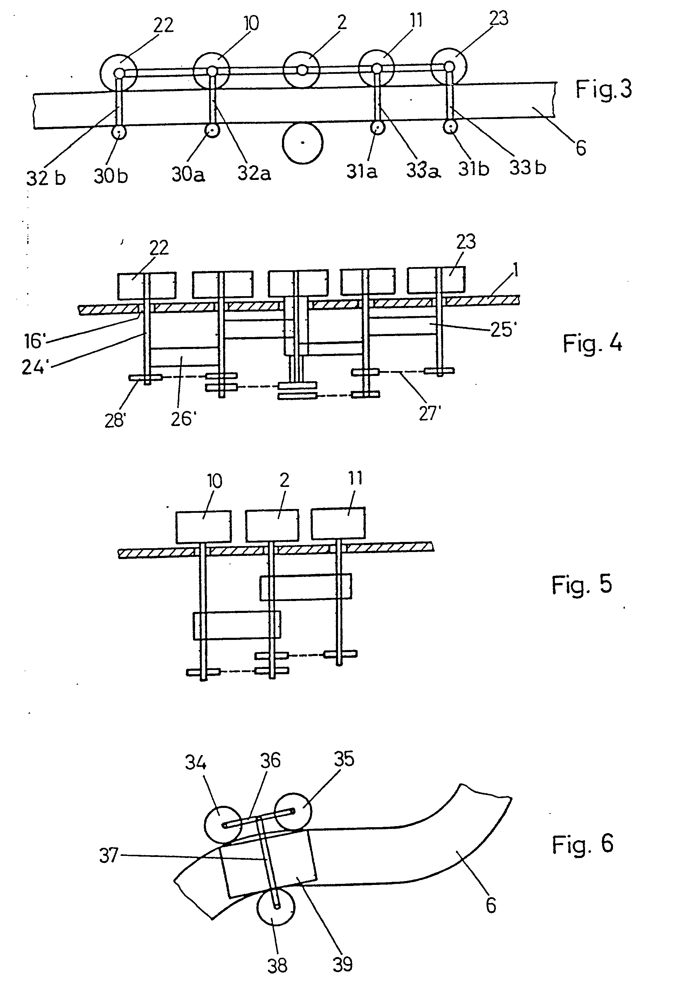

Bei der Ausführungsform nach Fig. 3 ist jeder der verschwenkbaren Führungs- und Transportrollen 10, 11, 22, 23 eine eigene Gegendruckrolle 30a, 30b, 31a, 31b mit jeweile einer getrennten Trägerschiene 32a, 32b, 33a, 33b zugeordnet. Im übrigen entspricht die Ausführung nach Fig. 3 der nach Fig. 2.

Die Ausführungsform nach Fig. 4 entspricht im wesentlichen der Darstellung nach Fig. 1. Die Achsen 24' und 25' sind jedoch von en zugehörigen Rollen 22 und 23 aus nach unten durch Aussparunen 16', 17' in der Arbeitsplage 1 geführt, die teilkreisbogenförmig um die Achse 12 bzw. 13 ausgeführt sind. Entsprechend sind die Gelenkverbindungen 26' 27' ebenso wie die Antriebsverbindungen 26', 29' unterhalb der Arbeitsplatte 1 ausgebildet. Mit dieser Ausführungsform wird erreicht, daß über den Rollen 10, 11, 22, 23 Achsen, Gelenkverbindungen und Antriebsvorrichtungen vorgesehen werden müssen, es ist jedoch erforderlich, die Arbeitsfläche für die von den Rollen 22 und 23 nach abwärts stehenden Achsen 24' und 25' mit Aussparungen zu versehen.

Eine vereinfachte Ausführungsform gegenüber der Anordnung nach Fig. 4 ist in Fig. 5 gezeigt, da hierbei die beiden äußeren Führungs- und Transportrollen weggelassen sind und das gesamte System lediglich aus der achsfesten Rolle 2 und jeweils auf entgegengesetzten Seiten der Rolle 2 angeordneten Rollen 10, 11 besteht.

Eine weitere, abgeänderte Ausführungsform der Erfindung ist in Fig. 6 schematisch dargestellt. Bei dieser Ausführungsform entfällt die ortsfeste Führungs- und Transportrolle. Es sind hierbei Führungs- und Transportrollen 34 und 35 angeordnet, die beide angetrieben sind und die über eine Gelenkwerbindung 36 miteinander verbunden sind. Von der Mitte der Gelenkwerbindung 36 führt ein mit der Verbindung 36 starr verbundener Träger 37 auf die entgegengesetzte Werkstückseite zu einer achsfesten Gegenrolle 36, die auf das Werkstück zu einstellbar ist und die unter Federvorspannung gegen das Werkstück anliegt. Bei dieser Ausführungsform ist das Werkzeug 39 auf dem Träger 37 bzw. dem Träger 37 und der Gelenkverbindung 36 befestigt oder durch diese Glieder geführt, wenn das Werkzeug 39 vom Rahmen aufgenommen wird.

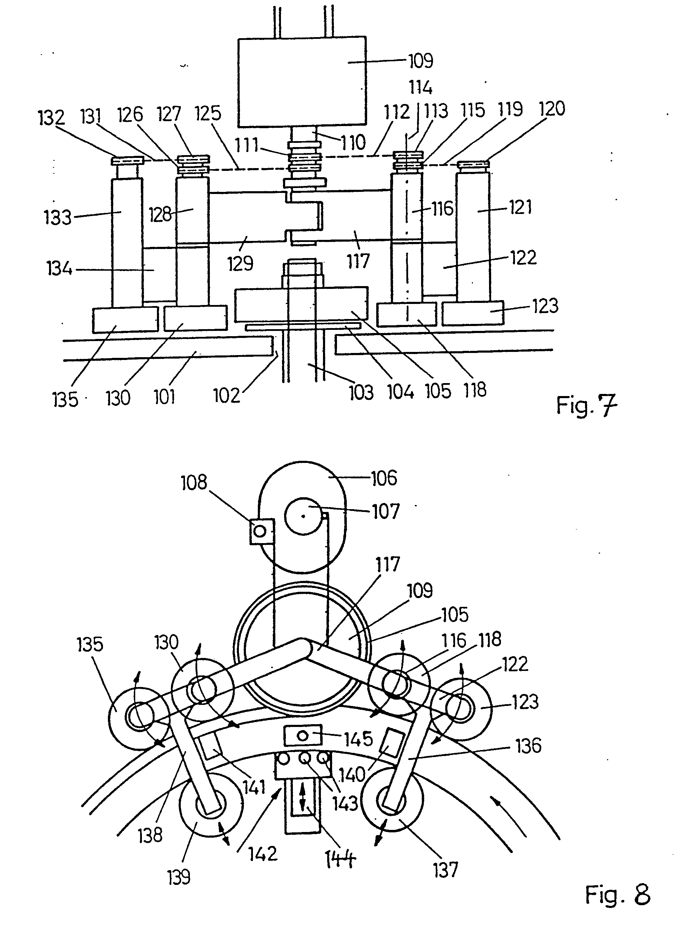

Bei der Ausführungsform nach den Figuren 7 und 8 weist ein Arbeitstisch 101 einer Tischfräse in einer Aussparung 102 eine Spindel 103 auf, auf der ein Anlaufring 104 und ein Fräswerkzeug 105 befestigt sind. Diese Ausführung einer Tischfräse ist bekannt. Mit einer derartigen Anordnung eines Fräswerkzeuges lassen sich Werkstücke von der Seite her bearbeiten, wenn das Werkstück von Hand oder eingespannt in Eingriff mit dem Fräswerkzeug gebracht wird.

Bei einer derartigen bekannten Tischfräse wird auf dem Arbeitstisch 101 eine Fußplatte 106 aufgebracht, die zur Aufnahme des Ständers 107 für den Motor und die Vorschubrollenaufhängung dient, der höhenverstellbar bei 108 angeordnet ist und der einen Motor 109 für den Antrieb der Vorschubrollen aufnimmt. Die Antriebswelle 110 des Motors 109 weist einen Abtrieb 111, z.B. ein Ritzel, mit Übertragungsvorrichtung 112, z.B. Kette, zu einem angetriebenen Rad 113, z.B. einem Ritzel auf, das auf einer vertikalen Achse 114 zusammen mit einem weiteren Ritzel 115 angeordnet ist. 116 bezeichnet die Gelenkverbindung auf der Achse 114, die eine Gelenkverbindung 116 mit einem Gelenkarm 117 aufweist, der auf der Achse 110 angelenkt ist. Die Gelenkverbindung 116 nimmt am unteren Ende eine Transport- und Führungsrolle 118 auf. Der auf die Achse 114 übertragene Antrieb wird über eine Antriebsverbindung 119 auf ein Ritzel 120 übertragen, das auf einer Achse 121 befestigt ist, die über einen Gelenkarm 122 mit der Achse 116 verbunden ist und die am unteren Ende eine Transport- und Führungsrolle 123 aufnimmt, die unnittelbar benachbart der Rolle 116 angeordnet ist. Auf der Welle 110 ist analog dem Ritzel 111 ein Ritzel 124 befestigt, das über eine Antriebsverbindung 125 Ritzel 126 und 127 antreibt, die auf einer Gelenkwelle 126 befestigtsind. Mit der Welle 126 ist ein Gelenkarm 129 fest verbunden, dessen entgegengesetztes Ende an der Welle 110 angelenkt ist. Die Welle 126 nimmt am unteren Ende eine Rolle 130 auf. Das Ritzel 127 besitzt eine Antriebsverbindung 131 zu einem weiteren Ritzel 132, das auf einer Gelenkwelle 133 befestigt ist. Die Welle 133 und die Welle 128 sind miteinander durch einen Gelenkarm 134 verbunden, und die Welle 133 nimmt am unteren Ende eine Rolle 135 auf. Die Rollen 118 und 123 sowie 130 und 135 sind einander fest zugeordnete Rollenpaare, die unmittelbar über dem Arbeitstisch 101 angeordnet sind und die von der über der spindel 103 der Tischfräse angeordneten Welle 110 und damit von dem Ständer 107 für den Motor 109 aufgenommen sind. Durch die Höhenverstellung 108 wird die Höhenlage dieser Rollen einstellbar.

Die Rollenpaare 118, 123 und 130, 135, die durch die Gelenkverbindungen 122 bzw. 134 miteinander verbunden sind, sind durch sn diesen Gelenkverbindungen 122 und 134 befestigten Querarmen 136 und 138 mit auf der entgegengesetzten Seite des Werkstückes W angeordneten Andrückrollen 137 und 139 fest verbunden. Diese Andrückrollen 137 und 139 sind federnd und einstellbar ausgebildet, so daß im Betrieb ein entsprechender Druck auf das Werkstück ausgeübt wird umd die Andrückrollen auf verschiedene Werkstückdurchmesser eingestellt werden können. Mit 140, 141 und 145 sind gefederte Werkstückniederhalter angedeutet, die als Rollen, Druckplatten oder dergl. ausgebildet und die z.B. an den Querarmen 136, 138 und/oder der Fußplatte 106 befestigt sind. Eine Andrückvorrichtung 142 ist als Führungsschuh ausgelegt und nimmt an dem am Werkstück W anliegenden Ende Andrückrollen 143 auf, die mit Hilfe eines Vorspanngliedes 144 gegen das Werkstück vorgespannt werden.

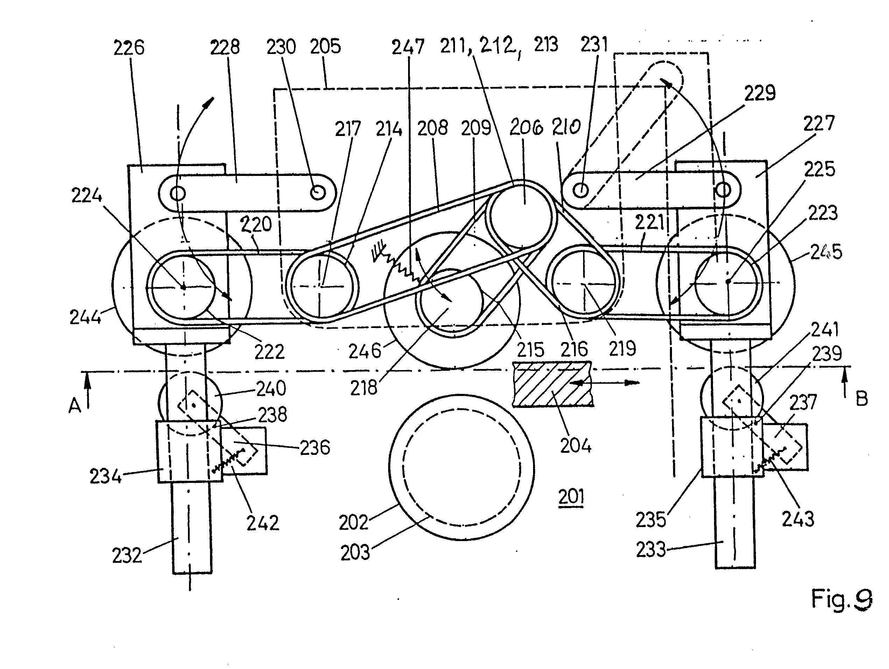

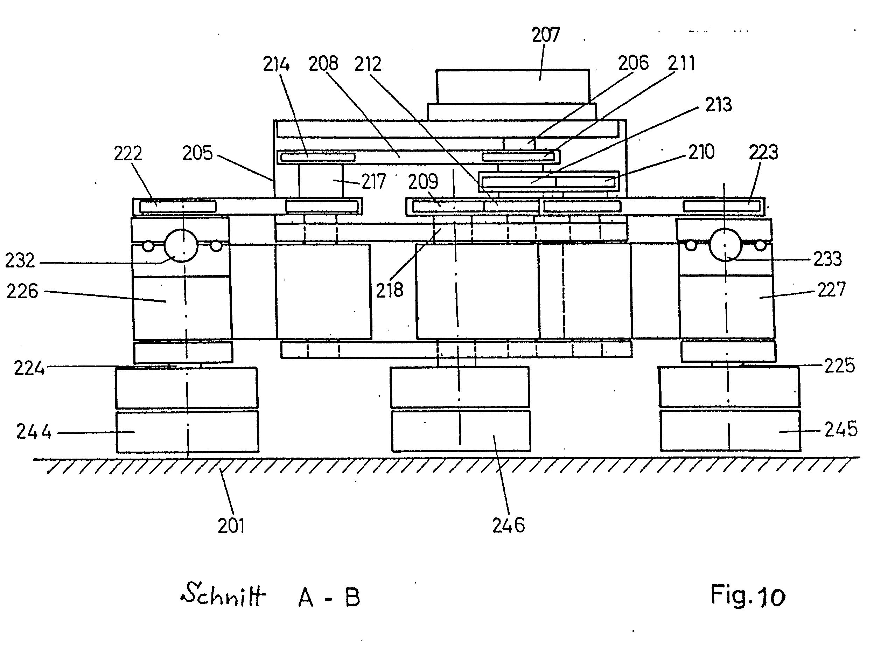

Bei der Ausführungsform nach den Figuren 9 und 10 ist in der Tischplatte 201 einer herkömmlichen Tischfräse ein Werkzeug 202, z.B. ein Profilfräser, mit Anlaufring 203 vertikal angeordnet, der in Eingriff mit einem Werkstück 204 kommen kann. Das Werkstück 204 wird von der geite her durch das Werkzeug im Durchlaufverfahren (Pfeilrichfung) bearbeitet. Die auf der in bezug auf das Werkzeug 203 gegenüberliegenden Werkstückseite angreifende Transport- und Andrückvorrichtung ist in einem Gehäuse 205 untergebracht, das auf der Tischplatte 201 ruht. Eine im Gehäuse 205 vertikal angeordnete Antriebswelle 206, die von einem Antriebsmotor 207 angetrieben wird, weist Antriebsverbindungen 208, 209, 210 auf, die z.B. in Form von Kettentrieben ausgebildet sind. Auf der Welle 206 sind entsprechende Kettenräder 211, 212, 213 angeordnet, während die Abtriebsräder 214 und 216 auf den angetriebenen gehäusefesten Achsen 217 und 219 sowie das Abtriebsrad 218 auf der auslenkbaren Achse angeordnet sind. Von den Kettenrädern bzw. Achsen wird die Antriebsverbindung über Antriebsketten 220, 221 auf Kettenräder 222, 223 übertragen, die auf Schwenkachsen 224, 225 festgelegt sind. Jede der Schwenkachsen 224 bzw. 225 nimmt einen Block 226 bzw. 227 auf, der um die Achse 217 bzw. 219 in der Tischplattenebene verdrehbar ist und mit dem ferner ein Ende eines Gelenkhebels 226 bzw. 229 befestigt ist, dessen anderes Ende so mit der Achse 217 bzw. 219 gelenkig bei 230 bzw. 231 verbunden ist, daß der Block 226 bzw. 227 um die Achse 217 bzw. 219 und gleichzeitig der Gelenkhebel 228 bzw. 229 um den Punkt 230 bzw. 231 schwenkbar ist. Dadurch entsteht eine Parallelogrammverschwenkung, wenn der Block 226 bzw. 227 ausgelenkt wird. Mit den Blöcken 226, 227 ist an ihren werkstückseitigen Enden jeweils eine starre Verbindung 232, 233, z.B. in Form einer freitragenden Stange vorgesehen, die sich mit ihrem freien Ende in den Block 226 bzw. 227 in dessen axialer Verlängerung bzw. parallel zueinander über das Werkstück hinaus erstrecken. Jede Stange 232 bzw. 233 nimmt einen axial verstellbaren Schieber 234 bzw. 235 auf, an dem ein Träger 236 bzw. 237 schwenkbar bei 238 bzw. 239 gelagert ist. An dem dem Werkstück zugewandten Ende des Trägers ist eine Andrückrolle 240 bzw. 241 aufgenommen; am entgegengesetzten Ende greift eine am Schieber festgelegte Feder 242 bzw. 243 an, die die Rolle 240 bzw. 241 über Hebelwirkung an das Werkstück andrückt. Über die Achse 224 bzw. 225 im Block 226 bzw. 227 wird jeweils eine Transportrolle 244 bzw. 245 angetrieben, die aus Kunststoff, Gummi oder dgl. besteht oder eine Auflage aus entsprechendem Material in Eingriff mit dem Werkstück besitzt. Diese Transportrolle 244 bzw. 245 steht der Andrückrolle 240 bzw. 241 gegenüber, so daß das Werkstück zwischen beiden Rollen eingespannt und verschoben wird. Die Rollen 240, 241 liegen dabei unter Federvorspannung gegen das Werkstück an. Sie sind auslenkbar, da die Werstückdicke infolge Krümmung des Werkstückes in der längsachse der Stange 232, 233 einen größeren Abstand besitzt als die Dicke des Werkstückes entspricht. Die Dicke des Werkstückes selbst wird durch Verstellen des Schiebers 234, 235 auf der Stamge 232, 233 eingestellt. Auf der gehäusefesten Achse 216 ist eine Antriebsrolle 246 angeordnet, die unter Vorspannung einer Feder 247, z.B. einer Gasfeder steht, und die mit hohem Druck das Werkstück 204 unmittelbar gegen das Werkzeug 203 drückt. Die Federvorspannumg 247 ist erforderlich, dsmit Unebenheiten des Werkstückes oder dergl.

aufgenommen werden konnen und ein einwandfreier Transport des Werkstückes sichergestellt ist.

## Patentansprüche

1. Bogenbearbeitungsmaschine zum Profilfräsen, Fälzen, Profilschleifen, Polieren, Abrichten oder ähnlichen Bearbeiten von geschwungenen bzw. bogenförmig gekrümmten Werkstücken aus Holz oder ähnlichem Material in Stabform, mit einer Werkstück-Mitnehmervorrichtung auf der einen Werkstückseite und einer Anschlag- bzw. Andrückvorrichtung auf der anderen Werkstückseite, sowie einem mit dem Werkstück in Eingriff bringbaren Bogenbearbeitungswerkzeug, dadurch gekennzeichnet, daß
a) die Mitnehmervorrichtung (2, 10, 11, 22, 23; 34, 35; 104, 118, 123, 130, 135; 244, 245, 246) aus einer motorgetriebenen, ortsfesten Transport- und Führungsvorrichtung (2; 34, 35; 104; 246) sowie sich auf das Werkstück (6; W; 204) einstellenden, in Richtung der Werkstückvorschubrichtung angeordneten, beweglichen bzw. schwenkbaren weiteren Transport- und Führungsvorrichtungen (10, 11, 22, 23; 128, 123, 130, 135; 244, 245) besteht,
b) die Transport- und Führungsvorrichtungen (2; 34, 35; 104; 246; 10, 11, 22, 23; 118, 123, 130, 135; 244, 245) auf einem als Auflage für das Werkstück (6; W; 204) dienenden Tisch (1; 101; 201) befestigt sind,
c) das Bogenbearbeitungswerkzeug (8; 105; 202) in der Mitte zwischen den Transport- und Führungsvorrichtungen und gegenüber einem festen Anschlag (7; 246) oder Werkstückniederhaltern (140, 141, 145) angeordnet ist, und
d) die Anschlagvorrichtung (7; 30, 31, 38; 137, 139, 142, 143; 234 - 243) einstellbare Anschlagglieder aufweist, die zumindest mit einem Teil der Transport- und Führungsvorrichtungen so verbunden sind, daß der Abstand zwischen letzteren und den zugeordneten Anschlaggliedern mindestens angenähert konstant bleibt.

2. Bogenbearbeitungsmaschine nach Anspruch 1, dadurch gekennzeichnet, daß die Mitnehmervorrichtung mindestens ein Paar von miteinander gelenkig gekoppelten, angetriebenen Transport- und Fßhrungsvorrichtungen (34, 35) aufweist, die in Anlagen mit dem Werkstück (6) stehen, daß eine achsfeste Anschlagvorrichtung (38) auf der anderen Werkstßckfläche in Anlage steht, daß die Anschlagvorrichtung (38) mit der Kopplung (36) eine feste Verbindung (37) aufweist, und daß das Bearbeitungswerkzeug (39) an der Verbindung (37) und/oder der Kopplung (36) befestigt ist.

3. Bogenbearbeitungsmaschine nach Anspruch 1, dadurch gekennzeichnet, daß die Transport- und Führungsvorrichtung (2) achsfest ausgebildet ist, daß ein Anschlagsglied (7) ein fester Anschlag, z.B. eine Anschlagrolle ist, daß die Transport- und Führungsvorrichtungen (10, 11, 22, 23) Antriebsrollen sind, daß mindestens ein Teil der Anschlagrollen und/oder der Führungsrollen gegen das Werkstück (6) vorgespannt sind, wobei die Führungsrollen (10, 11, 22, 23) vorzugsweise paarweise zu beiden Seiten der achsfesten Transport- und Führungssvorrichtung (2) angeordnet sind, und wobei die Führungsvorrichtungen (10,11) mit der Führungsvorrichtung (2) und die Führungsvorrichtungen (22, 23) jeweils mit den Führungsvorrichtungen (10, 11) schwenkbar bzw. gelenkig verbunden sind.

4. Bogenbearbeistungsmaschine nach Anspruch 1, 2 oder 3, dadurch gekennzeichnet, daß die achsfeste Führungsvorrichtung (2) angetrieben (bei 5) ist, u. daß von der Führungsvorrichtung (2) bzw. deren Achse (4) Antriebsverbindungen (18, 19) zu den Achsen (12, 13) der benachbarten Führungsvorrichtung (10, 11) sowie von diesen Antriebsverbindungen (28, 29) zu den Achsen (24, 25) der den Führungsvorrichtungen (10, 11) benachbarten Führungsvorrichtungen (22, 23) vorgesehen sind, und daß vorzugsweise die Achsen benachbarter Führungsvorrichtungen mittels mechanischer Verbindungsglieder (14, 15, 26, 27, 36) starr miteinander gekoppelt sind bzw. eine starre Verbindung (32, 33, 37) zu den Anschlagrollen (30, 31, 38) aufweisen, wobei die Anschlagrollen vorzugsweise relativ zum Werkstück (6) einstellbar angeordnet sind.

5. Bogenbearbeitungsmaschine nach einem der Ansprüche 1 - 4, dadurch gekennzeichnet, daß Stabilisierungsvorrichtungen in Form von Federanordnungen (Blattfedern, Gasfedern oder dergl.) vorgesehen sind, die an den Achsen (24, 20, 12, 4, 13, 21, 25) angreifen.

6. Bogenbearbeitungsmaschine nach Anspruch 1, wobei das Werkzeug von der Seite her auf das Werkstück einwirkt, dadurch gekennzeichnet, daß eine Anschlagvorrichtung (137, 139, 142) auf einer Werkstückseite vorgesehen ist, daß die Mitnehmervorrichtung (104, 118, 123, 130, 135) eine achsfeste Transport- und Führungsvorrichtung (104) und sich auf das Werkstück (W) einstellende, in Richtung der Werkstückvorschubrichtung angeordnete weitere Transport- und Führungsvorrichtungen (118, 123, 130, 135) aufweist, und daß die Anschlagvorrichtung (137, 139, 142, 143) aus einstellbaren Anschlaggliedern (137, 139, 142, 143) besteht, die mit den Transport- und Führungsvorrichtungen (104, 118, 123, 130, 135) so verbunden sind, daß bei einer Auslenkung einzelner Transport- und Führungsvorrichtungen der Abstand zwischen letzteren und den zugeordneten Anschlaggliedern im wesentlichen konstant bleibt, wobei die Mitnehmervorrichtung vorzugsweise Paare von miteinander gelenkig gekoppelten, angetriebenen Transportund Führungsgliedern (118, 123, 130, 135) in Anlage mit dem Werkstück (W) aufweist und eine achsfeste Anschlagvorrichtung (143, 142) auf der entgegengesetzten Werkstückseite in Anlage steht, wobei das Anschlagglied (43) beispielsweise ein fester Anschlag oder eine Anschlagrolle bzw. ein System aus mehreren Rollen ist, die relativ zum Werkstück einstellbar ausgebildet sind, und wobei sowohl die Anschlagglieder als die Transport- und Führungsvorrichtungen als Rollen ausgebildet sind, die gegen das Werkstück vorgespannt sind.

7. Bogenbearbeitungsmaschine nach Anspruch 6, dadurch gekennzeichnet, daß die Führungsrollen (118, 123, 130, 135) paarweise zu beiden Seiten der achsfesten Antriebswelle (110) bzw. des achsfesten Anlaufringes (104) angeordnet sind, daß, die Führungsrollen (118, 130) mit der Antriebwelle (110) und die Führungsrollen (123, 135) jeweils mit den Führungsrollen (118, 130) schwenkbar und antreibend verbunden sind, daß die Achsen benachbarter Rollen mittels mechanischer Verbindungsglieder, z.B. Schwenkarmen (116, 122, 129, 134) miteinander schwenkbar gekoppelt sind, die vorzugsweise eine starre Verbindung (136, 138) zu den Anschlagsrollen (137, 139) aufweisen, wobei die Verbindungen die Anschlagsrollen längsbeweglich und auf ihnen festlegbar aufweisen, und daß das ortsfeste Anschlaggleid (142) als in Längsrichtung einstellbarer Führungsschuh (114) ausgebildet ist, der an seinem werkstückseitegen Ende einstellbare Andrückrollen (143) aufweist

8. Bogenbearbeitungsmaschine nach Anspruch 1, wobei das Werkzeug von der Seite herauf das Werkstück einwirkt, dadurch gekennzeichnet, daß auf der dem Werkzeug (203) abgewandten Seite des Werkstückes (204) ein Aggregat (205-245) aus Antriebsmotor, Abtrieb für die dem Werkzeug zugeordnete Transportvorrichtung, Abtrieb für die vorlaufende und nachlaufende Transportvorrichtung und mit beiden letzteren verbundener Andrückvorrichtung auf der gegenüberliegenden Werk stückseite vorgesehen ist, und daß die beiden äußeren Antriebsvorrichtungen an den Abtrieben schwenkbar so gelagert sind, daß die Verbindungsachsen von Transportvorrichtung und zugehöriger Antriebsvorrichtung bei einer Verschwenkung infolge Werkstückkrümmung stets zumindest annähernd parallel zueinander und ihre Ausgangslage beibehaltend angeordnet sind, wobei die schwenkbare Lagerung vorzugsweise als Parallelogrammlagerung ausgebildet ist.

9. Bogenbearbeitungsmaschine nach Anspruch 8 dadurch gekennzeichnet daß auf der motorgetriebenen Antriebsachse (206) drei übereinander angeordnete Antriebsräder (211, 212, 213) angeordnet sind, die über Antriebsverbindungen (208, 209, 210) mit feststehenden Achsen (217, 219) und einer unter Vorspannung stehenden, durch das Werkstück auslenkbaren Achse (218) verbunden sind, daß die feststehenden Achsen (217, 219) antreibend mit Schwenkachsen (224, 225) und gelenkig mit Schwenkhebeln (228, 229) verbunden sind, daß Schwenkhebel und Schwenkachsen zu jeweils einem Parallelogramm verbunden sind, daß jede Schwenkachse eine Transportrolle (244, 245) für das Werkstück (204) und eine Andrückrolle (240, 241) aufnehmende Halterung (232, 233, 234, 235, 238, 239) aufweist, und daß die Achse (218) eine Transportrolle (246) aufnimmt, die in Höhe des Werkzeuges mittels Vorspannvorrichtung (247) in Eingriff mit dem Werkstück (204) steht, wobei die auf einem Schieber (235, 234) auslenkbar befestigte Andrückrolle (240, 241) vorzugsweise zusammen mit dem Schieber auf einer Führungsstange (232, 233) einstellbar geführt ist.

10. Bogenbearbeitungsmachine nach Anspruch 8 oder 9, dadurch gekennzeichnet, daß die Verbindung (224, 228) die bewegliche Seite des Parallelogramms darstellt, dessen gegenüberliegende feststehende Seite die Verbindung (217/230, 219/231) ist, und daß die Verbindung (224, 228) als ein die Führungsstange (232, 233) aufnehmender Block (226, 227) ausgebildet ist, in dem die Achse (224, 225) mit Transportrolle (244, 245) gelagert ist.

## Claims

1. Arc-machining apparatus for profile milling, notching, profile grinding, polishing, dressing or similarly machining swung or alternatively arc-curved workpieces made from wood or similar material in bar-shape, comprising workpiece follower means on the one side of the workpiece and stop or pressing means on the other side of the workpiece, and further comprising an arc-machining tool, which is able to engage the workpiece, characterised in that
   a) said follower means (2, 10, 11, 22, 23; 34, 35; 104, 118, 123, 130, 135; 244, 245, 246) comprise motordriven stationary transport and guide means (2; 34, 35; 104; 246) as well additional transport and guide means (10, 11, 22, 23; 128, 123, 130, 135; 244, 245), which adjust themselves to the workpiece (6; W; 204), are arranged along the direction of the workpiece feeding means, and are movable and pivotable,
   b) said transport and guiding means (2; 34, 35; 104, 246; 10, 11, 22, 23; 118, 123, 130, 135; 244, 245) are mounted on a table (1; 101; 201) supporting the workpiece (6; W; 204),
   c) said arc-machining tool (8; 105; 202) being arranged centrally between said transport and guiding means and opposite to a stationary stop (7; 246) or workpiece hold-down means (140, 141, 145), and
   d) said stop means (7; 30, 31, 38; 137, 139, 142) are provided with adjustable stop members, which are connected at least with part of said transport and guiding means so that the distance between the latter and the coordinated stop members is maintained substantially constant.

2. Arc-machining apparatus according to claim 1, characterised in that said follower means are provided with at least one pair of driven transport and guiding means (34, 35), which are hingedly coupled with each other and which are in contact with the workpiece (6), that an axis-referenced stop means (38) is in contact with the other surface of the workpiece, that said stop means (38) has a firm connection (37) to the coupling (36), and that said machining tool (39) is mounted to said connection (37) and/or said coupling (36).

3. Arc-machining apparatus according to claim 1, characterised in that said transport and guiding means (2) is axis-referenced, that a stop member (7) is a stationary stop, f.e. a stop roller, that said transport and guiding means (10, 11, 22, 23) are driving rollers, that at least part of said driving rollers and/or said guiding rollers are pretensioned against the workpiece (6), whereby said guiding rollers (10, 11, 22, 23) preferably are arranged in pairs at both sides of the axis-referenced transport amd guiding means (2), and whereby said guiding means (10, 11) are pivotably or hingedly connected with said means (2), and said guiding means (22, 23) each are pivotably or hingedly connected with said-guide means (10, 11).

4. Arc-machining apparatus according to claim 1, 2 or 3, characterised in that said axis-referenced guiding means (2) is driven (at 5), and that driving connections (18, 19) are provided from said guiding means (2) or alternatively their axis (4) to the axes (12, 13) of the adjacent guiding means (10, 11) as well from said driving means (28, 29) to the axes (24, 25) of said guiding means (22, 23) adjacent the guiding means (10, 11), and that preferably the axes of adjacent guiding means are firmly coupled with each other by means of mechanical coupling members (14, 15, 26, 27, 36) or alternatively have a firm connection (32, 33, 37) to the stop rollers (30, 31, 38), which preferably are adjustable relative to said workpiece (6).

5. Arc-machining apparatus according to one of claims 1 - 4, characterised in that stabilizing means in the form of spring means (flat springs, gas springs or the like) are provided, which are in engagement with the axes (24, 20, 12, 4, 13, 21, 25).

6. Arc-machining apparatus according to claim 1, whereby the tool operates laterally upon the workpiece, characterised in that stop means (137, 139, 142) are provided on one side of the workpiece, that said follower means (104, 118, 123, 130, 135) are provided with axis-referenced transport and guiding means (104) and additional transport and guiding means (118, 123, 130, 135), which are adjustable to the workpiece (W) and are arranged along the workpiece feeding direction, and that said stop means (137, 139, 142, 143) are adjustable stop members (137, 139, 142, 143), which are connected with said transport and guiding means (104, 118, 123, 130, 135) so that on deflection of individual transport and guiding means the distance between the latter means and the coordinated stop members is substantially constant, whereby said follower means preferably are provided with pairs of driven transport and guiding members (118, 123, 130, 135), which are hingedly coupled to each other, are in contact with the workpiece (W) and axis-referenced stop means (143, 142) are in contact with the opposite side of the workpiece, whereby the stop member (43) f.e. is a stationary stop or a stop roller or alternatively a system of a plurality of rollers, which are adjustable in view of the workpiece, and whereby as well the stop members as the transport and guiding means are formed as rollers, which are urged against said workpiece.

7. Arc-machining apparatus according to claim 6, characterised in that said guide rollers (118, 123, 130, 135) are provided in pairs at both sides of the axis-referenced driving shaft (110) or alternatively the axis-referenced butting ring (104), that said guide rollers (118, 130) are pivotably and drivingly connected with said drive shaft (110) and the guide rollers (123, 135) with said guide rollers (118, 130) each, that the axes of adjacent rollers are pivotably coupled with each other by means of mechanical connecting members, f.e. pivot arms (116, 122, 129, 134), which preferably have a firm connection (136, 138) with the stop rollers (137, 139), whereby the stop rollers are movable along and positionable on said connections, and that the stationary stop member (142) is formed as a guiding shoe (114), which is adjustable in a longitudinal direction and is provided with pressure rollers (143) at its end facing the workpiece.

8. Arc-machining apparatus according to claim 1, whereby the tool operates laterally against the workpiece, characterised in that om that side of the workpiece (204) opposite to the tool (203) a mechanism (205 - 240) is provided, which includes a driving motor, secondary driving means for the transport means coordinated to the tool, secondary driving means for the preceeding and succeeding transport means, and pressure means arranged at the opposite side of the workpiece and connected with the two last-mentioned transport means, and that both outer driving means at the secondary drives are pivotably supported so that the connection axes of said transport means and said coordinated driving means on deflections caused by the curvature of the workpiece always are substantially parallel to each other and maintain their starting position, whereby the pivotable support preferably is formed as a parallelogram support.

9. Arc-machining apparatus according to claim 8, characterised in that said motor-driven driving axis (206) is provided with three driving wheels (211, 212, 213) one above the other, which driving wheels are connected by means of driving connections (208, 209, 210) with stationary axes (217, 219) and an axis (218), which is biased and is deflectable by the workpiece, that the stationary axes (217, 219) are drivingly connected with pivot levers (228, 229), that pivot levers and pivot axes are connected to a parallelogram each, that each pivot axis is provided with a transport roller (244, 245) for the workpiece (204) and a support (232, 233, 234, 235, 238, 239) carrying a pressure roller (240, 241), and that said axis (218) carries a transport roller (246), which engages the workpiece (204) at the level of the tool through biasing means (247), whereby said pressure roller (240, 241), which is deflectably mounted on a pusher (235, 234), is adjustably guided on a guide bar (232, 233) preferably together with said pusher.

10. Arc-machining apparatus according to claim 8 or 9, characterised in that said connection (224, 228) forms the variable side of the parallogram the opposite stationary side of which forms the connection (217/230, 219/231), and that said connection (224, 228) is formed as a block (226, 227) carrying the guide bar (232, 233), in which block the axis (224, 225) is supported together with said transport roller (244, 245).

**Revendications**

1. Machine de travail de pièces en arc, notamment de pièces en bois ou en matériaux analogues, pour effectuer sur ces pièces des opérations variées, et notamment de fraisage profile, de polissage ou de dégauchissage, les pièces à traiter se présentant sous forme de barres courbes ou cintrées; et la machine comportant d'un côté de la pièce à usiner un dispositif d'entraînement pour faire avancer la pièce, et de l'autre côte de celle-ci un dispositif de butée et de pression, ainsi qu'un outil servant à usiner la pièce cintrée et adapté à être mis en prise sur celle-ci; la machine étant caractérisée en ce que:

a) le dispositif d'entraînement (2, 10, 11, 22, 23; 34, 35; 104, 118, 123, 130, 135; 244, 245, 246) comporte un système de transport et de guidage (2; 34, 35; 104; 246) monté à poste fixe et commandé par un moteur, ainsi que d'autres systèmes de transport et de guidage (10, 11, 22, 23; 128, 123, 130, 135; 244, 245) pouvant s'adapter de manière réglable sur la pièce à usiner (6; W; 204), ces autres systèmes étant disposés dans le sens du mouvement d'avance de la pièce à usiner, et montés de manière mobile ou pivotante;

b) les systèmes de transport et de guidage (2; 34, 35; 104; 246; 10, 11, 22, 23; 118, 123, 130, 135; 244, 245) sont fixés sur une table (1; 101; 201) qui sert d'appui pour la pièce à usiner (6; W; 204);

c) l'outil (8; 105; 202) qui sert à usiner la pièce cintrée est monté en position médiane entre les systèmes de transport et de guidage, et en regard d'une butée fixe (7; 246) ou d'organes de maintien de la pièce (140, 141, 145);

d) et en ce que le dispositif de butée (7; 30, 31, 38; 137, 139, 142, 143; 234-243) comporte des organes de butée réglables, qui sont reliés à au moins une partie des systèmes de transport et de guidage, de manière à assurer au moins approximativement un écartement constant entre ces systèmes de transport et de guidage et les organes de butée correspondants.

2. Machine selon la revendication 1, caractérisée en ce que le dispositif d'entraînement comporte au moins une paire d'organes de transport et de guidage (34,35) accouplés dans une monture articulée (36), entraînés par un moteur, et adaptés à rester appliqués contre la pièce à usiner (6); un organe de butée fixe (38) étant en appui contre l'autre face de la pièce à usiner, et l'organe de butée fixe (38) étant rigidement associé à la monture d'accouplement (36) par un élément de liaison (37); et en ce que l'outil (39) qui sert à usiner la pièce est fixé à cet élément de liaison (37), et/ou à la monture d'accouplement (36).

3. Machine selon la revendication 1, caractérisée en ce que le système de transport et de guidage (2) est monté à poste fixe dans l'axe; un organe de butée (7) étant constitué par une butée fixe telle qu'un galet de butée; les organes de transport et de guidage (10, 11, 22, 23) étant constitués par des galets d'entraînement; au moins une partie des galets de butée et/ou des galets de guidage étant appliqués élastiquement avec précharge contre la pièce à usiner (6); les galets de guidage (10, 11, 22, 23) étant de préférence disposés par paires, de part et d'autre du système de transport et de guidage monté à poste fixe dans l'axe; et les organes de guidage (10, 11) étant reliés chacun de manière pivotante ou articulée au système de guidage (2), alors que les organes de guidage (22, 23) sont eux-mêmes reliés de manière pivotante ou articulée aux organes de guidage (10,11).

4. Machine selon l'une des revendications 1 à 3, caractérisée en ce que le système de transport et de guidage est associé à un organe d'entraînement (5); en ce que des organes de liaison et d'entraînement (18, 19) sont prévus entre l'axe (4) du système de guidage (2) et les axes (12, 13) des organes de guidage adjacents (10, 11), d'autres organes de liaison et d'entraînement (28, 29) étant prévus entre ces derniers axes (12,13) et les axes (24, 25) des organes de guidage (22, 23) adjacents aux organes de guidage (10, 11); et en ce que de préférence les axes des organes de guidage voisins sont accouplés rigidement entre eux, au moyen d'organes mécaniques de liaison (14, 15, 26, 27, 36), ou comportent une liaison rigide (32, 33, 37) avec les galets de butée (30, 31, 38); les galets de butée étant de préférence montés de manière réglable par rapport à la pièce à usiner (6).

5. Machine selon l'une des revendications 1 à 4, caractérisée en ce qu'elle comporte des organes de stabilisation, constitués par des systèmes élastiques (à ressorts, à gaz, ou analogues), montés sur les axes (24, 20, 12, 4, 13, 21, 25).

6. Machine selon la revendication 1, dans laquelle l'outil attaque par le côté la pièce à usiner; caractérisée en ce qu'elle comporte un dispositif de butée (137, 139, 142) monté d'un côté de la pièce à usiner; en ce que le dispositif d'entraînement (104,118,123,130,135) comporte un organe de transport et de guidage (104) à axe fixe, et d'autres organes de transport et de guidage (118, 123, 130, 135), disposés dans le sens du mouvement d'avance de la pièce à usiner (W), et adaptés à se régler sur celle-ci; et en ce que le dispositif de butée (137, 139, 142, 143) comporte des organes de butée réglables (137, 139, 142, 143), qui sont reliés aux organes de transport et de guidage (104, 118, 123, 130), de manière à maintenir à une valeur sensiblement constante l'écartement entre ces derniers organes de transport et de guidage et les organes de butée associés, lorsqu'on modifie l'inclinaison individuelle des organes de transport et de guidage; le dispositif d'entraînement comportant de préférence des paires d'organes de transport et de guidage (118, 123, 130, 135), entraînés par un moteur et accouplés dans des montures articulées, pour se trouver appliqués sur la pièce à usiner (W), et un organe de butée (143, 142) à axe fixe, en appui sur la face opposée de la pièce à usiner; l'organe de butée (43) étant constitué par exemple par une butée fixe, ou par un galet d'appui, ou encore par un système de plusieurs galets, montés de manière réglable par rapport à la pièce à usiner; et les organes de butée, ainsi que les organes de transport et de guidage, étant constitués par des galets qui sont en appui élastique contre la pièce à usiner.

7. Machine selon la revendication 6, caractérisée en ce que les galets de guidage (118, 123, 130, 135) sont disposés par paire des deux côtés de l'arbre d'entraînement à axe fixe (110) et de la bague d'entrée à axe fixe (104); en ce que les galets de guidage (118, 130) sont reliés de manière pivotante à l'arbre d'entraînement (110), en étant entraînés par celui-ci, les galets de guidage (123, 135) étant reliés chacun de manière pivotante aux galets de guidage (118, 130) et entraînés par ceux-ci; en ce que les axes de galets adjacents sont accouplés entre eux de manière pivotante, par des organes mécaniques de liaison ou des bras articulés (116, 122, 129, 134) eux-mêmes liés de préférence aux galets de butée (137, 139) par une fixation rigide (136, 138), ces fixations étant mobiles dans le sens longitudinal avec les galets de butée qu'elles portent; et en ce que l'organe de butée fixe (142) est constitué par un sabot de guidage (144), qui est réglable dans le sens de la longueur, et qui porte des galets de pression réglables (143) sur sa face tournée vers l'outil.

8. Machine selon la revendication 1, dans laquelle l'outil attaque par le côté la pièce à usiner; caractérisée en ce qu'elle comporte, du côté de la face de la pièce à usiner (204) opposée à l'outil (203), un ensemble (205-246) constitué par le moteur d'entraînement, le mécanisme de commande du dispositif de transport associé à l'outil, le mécanisme de commande des dispositifs de transport situés en amont et en aval de l'outil, et le dispositif de pression associé à chacun des deux dispositifs de transport amont et aval, du côté opposé de la pièce à usiner; les deux dispositifs d'entraînement extérieurs étant articulés sur leurs organes moteurs, de manière à maintenir au moins à peu près le parallélisme des axes de liaison du dispositif de transport et du dispositif d'entraînement associé, tant entre ces axes que par rapport à leur position de départ, lorsque les articulations correspondantes jouent en raison de la courbure de la pièce à usiner, le montage articulé de ces axes étant de préférence réalisé en parallèlogramme déformable.

9. Machine selon la revendication 8, caractérisée en ce que l'axe d'entraînement (206) commandé par un moteur porte trois roues d'entraînement accolées (211, 212, 213), associées à des organes de liaison et d'entraînement (208, 209, 210) qui agissent suivant des axes fixes (217, 219), et avec un effort élastique de rappel, pour faire tourner un axe (218) dont la monture articulée peut jouer sous l'action de la pièce à usiner; les axes fixes (217, 219) étant reliés aux axes mobiles (224, 225) qu'ils font tourner, et appartenant par ailleurs à un système articulé comportant des leviers oscillants (228, 229) qui constituent un parallélogramme articulé avec les axes mobiles (224, 225); chacun des axes mobiles portant un galet de transport (244, 245) pour faire avancer la pièce à usiner (204), et une monture (232, 233, 234, 235, 238, 239) pour un galet de pression (240, 241); et en ce que l'axe (218) porte un galet de transport (246), qui est en prise avec la pièce a usiner (204) à hauteur de l'outil, grâce à un système de rappel élastique (247), alors que chaque galet de pression (240,241), monté à bascule sur un coulisseau (234,235), est fixé de préférence, de manière réglable, avec son coulisseau sur une tige de guidage (232, 233).

10. Machine selon l'une des revendications 8 ou 9, caractérisée en ce que l'organe de liaison (224, 229) constitue le côté mobile du parallélogramme, dont le côté fixe et opposé est constitué par l'organe de liaison (217/230, 219/231); et en ce que l'organe de liaison (224, 228) est constitué par un bloc (226, 227), auquel est fixée la tige de guidage (232, 233), et qui contient le palier de l'axe (224, 225) qui porte le galet de transport (244, 245).

Fig. 1

Fig. 2

Fig. 3

Fig. 4

Fig. 5

Fig. 6

Fig. 7

Fig. 8

Fig. 9

Schnitt A - B                                          Fig.10